**Europäisches Patentamt**

**European Patent Office**

**Office européen des brevets**

(11) Veröffentlichungsnummer: **0 083 726**

**A1**

(12) **EUROPÄISCHE PATENTANMELDUNG**

(21) Anmeldenummer: **82111073.1**

(22) Anmeldetag: **01.12.82**

(51) Int. Cl.³: **F 24 D 9/00**
**F 28 D 21/00, F 24 D 5/02**

(30) Priorität: **12.12.81 DE 3149915**

(43) Veröffentlichungstag der Anmeldung:
**20.07.83 Patentblatt 83/29**

(84) Benannte Vertragsstaaten:
**AT BE CH DE FR GB IT LI LU NL SE**

(71) Anmelder: **Joh. Vaillant GmbH u. Co**
**Berghauser Strasse 40 Postfach 10 10 20**
**D-5630 Remscheid 1(DE)**

(72) Erfinder: **Trümper, Heinrich, Prof.**
**Teichwinkel 7**
**D-5100 Aachen(DE)**

(72) Erfinder: **Knoche, Karl-Friedrich, Prof.**
**Wiesenweg 87**
**D-5100 Aachen(DE)**

(74) Vertreter: **Heim, Johann-Ludwig**
**c/o Joh. Vaillant GmbH u. Co Berghauser Strasse 40**
**D-5630 Remscheid(DE)**

(54) **Anlage zur Luftheizung.**

(57) Vorgeschlagen wird eine Luftheizungs- (38) und Abluft- beziehungsweise Abgasabführungsanlage (32,33) unter Verwendung einer Wärmequelle (2) zur Speisung eines Speichers (15), der seinerseits einen Zapfwasserbedarf deckt beziehungsweise eine Warmwasserzentralheizung (23) speist.

Mit einem Abgaswärmetauscher (32) wird das von der Wärmequelle (2) gelieferte Abgas noch weiter heruntergekühlt, dieser Wärmetauscher dient der Aufheizung der Luft im Bereich der Luftheizung. Stromab dieses Wärmetauschers ist ein Entlüftungsstutzen (37) vorgesehen, mit dem Abluft aus einem beliebigen Raum abgeführt werden kann, die dem Abgas beigemischt wird. Da diese Abluft einen geringeren Feuchtigkeitsgehalt aufweist als das Abgas stromab des Wärmetauschers, wird eine Erniedrigung der Feuchte im Abgas/Abluftgemisch erzielt. Ein Abgas/Abluftgebläse ist stromab der Vereinigungsstelle Abgas/Abluft vorgesehen.

Hauptanwendungsgebiet ist das Heizen und Lüften von Ein- und Mehrfamilienhäusern.

Joh. Vaillant GmbH u. Co

EP 885

1. Dezember 1982

- 1 -

### Anlage zur Luftheizung

Die vorliegende Erfindung bezieht sich auf eine Anlage zur Luftheizung eines Raums gemäß dem Oberbegriff des Hauptanspruchs.

Es ist ein Einfamilienhaus bekanntgeworden, dessen einzelne Räume eine Zuluftführung aufweisen, in die ein Wärmetauscher eingeschaltet ist. Dieser Wärmetauscher wird vom Abgas einer oder mehrerer Wärmequellen beaufschlagt, weiterhin wird dem Abgas Abluft aus unterschiedlichen Räumen beziehungsweise Küchenwrasen pneumatisch parallel beigemischt. Das Gemisch aus Abgas, Abluft und Dünsten wird durch den Wärmetauscher geleitet und erwärmt die den Räumen zugeführte Frischluft. Hierbei ist einmal als nachteilig zu betrachten, daß sich aufgrund des Anschlusses der Küche der Wärmetauscher auf der

- 2 -

dem Abgas zugewandten Seite zusetzen wird, so daß sich die Wärmeübertragungseigenschaften im Laufe der Zeit stark verschlechtern werden. Zum zweiten ist das den Abgaswärmetauscher verlassende Abgas-/Abluftgemisch feuchtigkeitsgesättigt, so daß es im nachgeschalteten Schornstein zu Versottungserscheinungen kommen wird, insbesondere, wenn man das für ein Einfamilienhaus bekannte Abluftsystem auf ein Mehrfamilien- oder Vielfamilienhaus überträgt.

Es ist weiterhin bekannt, einem Heizkessel abgasseitig zwei Wärmetauscher nachzuschalten, wobei mit dem einen Wärmetauscher Umluft eines Raumes aufgeheizt wird und wobei mit dem anderen Wärmetauscher aus dieser Umluft abgezweigte Luft aufgeheizt wird und dem Abgaspfad stromab des Umluftwärmetauschers zugegeben wird.

Der vorliegenden Erfindung liegt die Aufgabe zugrunde, den Nachheiz-Wärmetauscher im Abgaspfad zu vermeiden. Andererseits muß die Feuchte der Abgase stromab des Abgaswärmetauschers so niedrig sein, daß Kondensationserscheinungen im Schornstein weitgehend vermieden, so daß es nicht zu einer Versottung des Schornsteins kommt.

Die Lösung dieser Aufgabe gelingt mit den im kennzeichnenden Teil des Hauptanspruchs angegebenen Merkmalen.

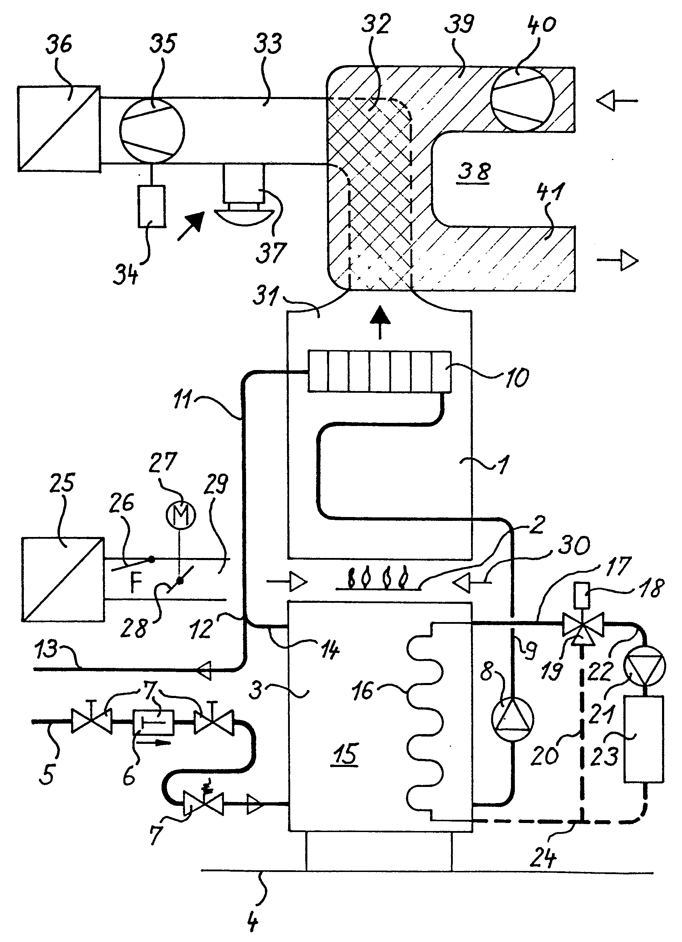

Weitere Ausgestaltungen und besonders vorteilhafte Weiterbildungen der Erfindung gehen aus den Unteransprüchen sowie der nachfolgenden Beschreibung hervor, das Ausführungsbeispiel der Erfindung anhand der Figur der Zeichnung näher erläutert.

Die Figur zeigt eine schematische Darstellung der Luftheizungsanlage mit den Führungen für Frischluft, Umluft zur
Raumheizung und Abgas mit Abluftbeimischung.

Aus der Figur geht eine Einheit einer Luftheizungsanlage hervor, die aus einer zentralen Wärmequelle 1 besteht. Diese
Wärmequelle ist ein brennstoffbeheizter Wasserheizer, sei
es in Form eines Öl- oder Gaskessels oder eines mit festen
Brennstoffen beheizten Umlaufwasserheizers, sowohl für die
Bereitung von warmem Gebrauchswasser als zur Speisung einer
Heizungsanlage. Diese Wärmequelle 1 wird von einem Brenner
2 über eine nichtdargestellte mit einem Brennstoffventil versehene Brennstoffzuleitung gespeist und ist unmittelbar auf
einen Wasserspeicher 3 aufgesetzt, der seinerseits auf einem Fundament 4 ruht, das eine Kellerdecke oder eine beliebige Etagendecke in einem Vielfamilienhaus sein kann. In den
Speicher führt aus einem Wassernetz 5 eine Wasserzuleitung
6, die stromauf des Speichers mit den üblichen Sicherheits-
und Absperrarmaturen 7 versehen ist.

Die Leitung 6 mündet in den unteren Bereich des Speichers
3, eine mit einer Umwälzpumpe 8 versehene Speichervorlaufleitung 9 ist durch einen Wärmetauscher 10 im Bereich der Wärmequelle 1 geführt und verläßt den Wärmetauscher 10 als Vorlaufleitung 11, die sich an einer Verzweigungsstelle 12 in eine Brauchwasser-Speiseleitung 13 und in eine Rücklaufleitung 14 in den Speicher 3 aufteilt.

Im Inneren 15 des Speichers ist eine Wärmetauscher-Rohrschlange 16 angeordnet, die an eine Heizungsvorlaufleitung 17 angeschlossen ist, in der ein von einem Stellmotor 18 beherrschtes Drei-Wegeventil 19 vorgesehen ist, dessen einer Anschluß mit einer Bypassleitung 20 und dessen anderer Anschluß mit einer mit einer Heizungsumwälzpumpe 21 versehenen Verbrauchervorlaufleitung 22 verbunden ist, die über einen Verbraucher 23, der aus einer Vielzahl parallel oder in Serie geschalteter Heizkörper oder einer Fußbodenheizungsanlage besteht, zu einer Rücklaufleitung 24 geführt ist, die unter Vereinigung mit der Bypassleitung 20 rücklaufseitig zur Rohrschlange 16 des Wasserspeichers 3 geführt ist.

Dem Aufstellungsraum der Wärmequelle 1 ist Frischluft von einem Frischluftkamin 25 über eine mit einer Feuerschutzklappe 26 und einer von einem Stellmotor 27 gesteuerten Regelklappe 28 beherrschten Frischluftleitung 29 zugeführt. Wie der Pfeil 30 andeutet, kann der Wärmequelle auch Raumluft aus dem Ausstellungsraum alternativ oder zusätzlich beziehungsweise dem Raum Frischluft aus dem Kamin 25 zugeführt werden.

Dem Wärmetauscher 10, der von den Abgasen des Brenners 2 beheizt wird, ist ein Abgasstutzen 31 nachgeschaltet, der teilweise vom Gehäuse der Wärmequelle 1 gebildet ist. Dieser Abgasstutzen ist mit einem Abgaswärmetauscher 32 verbunden, der stromab über eine Abgasleitung 33, die mit einem von einem Motor 34 angetriebenen Abgas-/Abluftgebläse 35 versehen ist und zu einem weiteren Kamin 36 führt. An die Abgasleitung 33 ist ein Entlüftungsstutzen 37 angeschlossen, mit dem Raumluft aus einem Aufstellungsraum abgeführt werden kann, wobei dieser Aufstellungsraum der Aufstellungsraum der Geräteeinheit beziehungsweise ein oder mehrere hiervon unabhängige Räume sein kann beziehungsweise können, die notwendigerweise sowieso entlüftet werden müssen. An den Abgaswärmetauscher 32 ist eine Luftheizung 38 angeschlossen, die aus dem luftheizerseitigen Teil des Wärmetauschers sowie einer Luftzufuhrleitung 39, die mit einem Gebläse 40 versehen sein muß und einer Leitung 41 für vorgeheizte Luft bestehen kann. Diese Luftheizungsanlage kann über die Leitung 39 einmal Abluft aus einem Raum zum Aufheizen ansaugen oder auch Frischluft aus der Atmosphäre. Die Leitung 41 für vorgeheizte Luft kann in denselben Raum führen, an den auch die Leitung 39 angeschlossen ist. Es besteht auch die Möglichkeit, die Leitung 41 an ein oder mehrere Räume zusätzlich oder alternativ anzuschließen.

Es besteht auch die Möglichkeit, die Leitung 41 mit dem Raum zu verbinden, in dem der Abluftstutzen 37 angeordnet ist. Diese Räume können aber auch voneinander verschieden sein. Die Luftheizung 38 kann also auch ebenso eine Umluftheizung wie eine Frischluftheizung sein.

Die eben beschriebene Luftheizungsanlage weist folgende Funktion auf: Wärmequelle 1 und Wasserspeicher 3 gehen in Betrieb, falls der Verbraucher 23 der Heizungsanlage oder ein im Zuge der Zapfleitung 13 befindliches Warmwasserzapfventil durch Öffnen einen Wärmebedarf signalisieren. Hierbei kann ein kleinerer Wärmebedarf nur durch den Speicher befriedigt werden, bei größerem oder länger andauerndem Wärmebedarf kann die Wärmequelle 1 zusätzlich in Tätigkeit gesetzt werden. Geht die Wärmequelle 1 in Tätigkeit, so wird der Motor 27 betätigt, so daß die Frischluftzufuhr zur Wärmequelle 1 gewährleistet ist. Das Brennstoffventil zum Brenner 2 wird geöffnet, der am Brenner 2 austretende Brennstoff wird gezündet, das vom Brenner 2 erzeugte Abgas beheizt den Wärmetauscher 10, das Abgas stromab des Wärmetauschers 10 beheizt den Wärmetauscher 32 und wird dort durch die durch die Leitung 39 herangeführte kühle Luft gekühlt. Die Luft wird andererseits aufgeheizt und über die Leitung 41 den ausgewählten Verbrauchern zugeführt. Da beim Abkühlen des Abgases Kondensat anfällt, besitzt der Wärmetauscher 32 eine nicht weiter dargestellte Kondensatabfuhrleitung. Um den Kondensatanfall im Schornstein 36 zu minimieren und da andererseits ohnehin eine Entlüftung von Aufstellungsräumen von Mehrfamilienhäusern notwendig ist, wird der feuchte Zustand des Abgases in der Leitung 33, also stromab des Abgaswärmetauschers 32, dadurch herabgesetzt, daß die Abluft von dem oder den Abgasstutzen 37, die nicht feuchte gesättigte Abluft führen, herabgesetzt wird. Der Abluftstutzen 37 dient also einmal dem Zweck, die relative und vor allem die absolute Feuchte der Abgase stromab des Wärmetauschers zu erniedrigen, andererseits dazu, hierzu keine zusätzliche Energiequelle zum Aufheizen des Abgases einzusetzen, sondern die ohnehin erforderliche Entlüftung der Räume zum Erniedrigen des Feuchtegehaltes der Abgase auszunutzen.

- 1 -

Ansprüche

1.  Anlage zur Luftheizung eines Raumes mit einer brennstoffbeheizten Wärmequelle, einer Abgasführung,
    einer Luftführung und einem Wärmetauscher zwischen
    beiden Führungen, dadurch gekennzeichnet, daß ein
    Entlüftungsstutzen (37) für Abluft aus einem Raum
    an die Abgasführung (33) stromab des Wärmetauschers
    (32) angeschlossen ist.

2.  Anlage nach Anspruch eins, dadurch gekennzeichnet,
    daß die Wärmequelle (1), die Abgas- (33)/-abluftführung (39) und der Wärmetauscher (32) sowie der
    Entlüftungsstutzen (37) eine bauliche Einheit bil-
    den.

- 2 -

- 2 -

0083726

3. Anlage nach Anspruch eins oder zwei, dadurch gekennzeichnet, daß der Abluftstutzen (37) und der Anschlußstutzen für die Leitung (41) für vorgeheizte Frischluft aus dem Abgaswärmetauscher (32) in verschiedenen Räumen vorgesehen sind.

4. Anlage nach einem der Ansprüche eins bis drei, dadurch gekennzeichnet, daß ein Gebläse (40) in der Abgas-/Abluftleitung (33) stromab der Einmündung des Entlüftungsstutzens (37) angeordnet ist.

5. Anlage nach einem der Ansprüche eins bis vier, dadurch gekennzeichnet, daß das Gebläse (40) stromauf des Wärmetauschers (10) angeordnet ist.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-3 010 343 (SCHNEIDER)<br>* Seite 6, Absatz 1; Figur, Position 6 * | 1,4 | F 24 D 9/00<br>F 28 D 21/00<br>F 24 D 5/02 |
| A | US-A-4 293 094 (McGILLIS) | | |
| A | GB-A-1 528 976 (STAMICARBON) | | |

| | RECHERCHIERTE SACHGEBIETE (Int. Cl ³) |
|---|---|
| | F 24 D 5/00<br>F 24 D 9/00<br>F 24 D 11/00<br>F 28 D 21/00 |

Der vorliegende Recherchenbericht wurde für alle Patentansprüche erstellt.

| Recherchenort<br>BERLIN | Abschlußdatum der Recherche<br>03-03-1983 | Prüfer<br>PIEPER C |
|---|---|---|